# EUROPÄISCHE PATENTANMELDUNG

(11) **EP 1 089 544 A2**
(43) Veröffentlichungstag der Anmeldung: **04.04.2001**
(21) Anmeldenummer: 00120957.6
(22) Anmeldetag: 26.09.2000
(51) Int. Cl.: H04N 1/04

(54) **Verfahren und Vorrichtung zum digitalen Erfassen fotografischer Filme**

(30) Priorität: 28.09.1999 DE 19946332
(71) Anmelder: Agfa-Gevaert AG, 51373 Leverkusen (DE)
(72) Erfinder: Grandverger, Marijan, 80339 München (DE); Gross, Ekkehard, 85661 Forstinning (DE); Lorenz, Bernhard, 85417 Marzling (DE)

(57) **Zusammenfassung**

Die Erfindung geht aus von einem Verfahren zum digitalen Erfassen von Vorlagen (1) mit einer Abtasteinrichtung (3), die eine sensitive Fläche (4) aufweist, welche in einer Längsrichtung und einer Querrichtung aus einer Vielzahl von Pixeln besteht. Charakteristisch für die Erfindung ist eine rotatorische oder lineare Bewegung der Abtasteinrichtung (3) um mehrere Pixel vor und/oder während des Erfassungsvorgangs.

## Beschreibung

Die Erfindung geht aus von einem Verfahren und einer Vorrichtung zum digitalen Erfassen von Vorlagen nach dem Oberbegriff von Patentanspruch 1 bzw. Patentanspruch 14.

Um Einzelbilder auf fotografischen Filmen zu bearbeiten und dann - beispielsweise mit einem Laserprinter - auf Papier belichten zu können, müssen die Bilder, wie es z. B. in der US 5 684 601 beschrieben ist, mit hoher Auflösung gescannt und digital erfaßt werden. Ein Nachteil dabei ist der Verlust von Information bzw. Auflösung. Dies beruht insbesondere darauf, daß - technologisch bedingt- die kleinste darstellbare Information auf einem Film kleiner bzw. die Anzahl von Informationsträgern pro Flächeneinheit auf dem Film größer als auf der Abtasteinrichtung ist. Die Korngröße eines Films ist also kleiner als die Pixelgröße einer digitalen Abtasteinrichtung, wie z. B. einer geeigneten CCD-Anordnung (CCD-Chip mit 2042 x 3072 Pixel).

Andererseits variiert das Seitenverhältnis bei verschiedenen Filmen, so daß das Format der Einzelbilder nicht immer mit dem Format der CCD übereinstimmt. So kann bei einem Rollfilm ein Einzelbild beispielsweise ein Format von 60 mm x 45 mm oder ein Format von 60 mm x 90 mm aufweisen. Dadurch können nicht in beiden Fällen alle Pixel der CCD für die Erfassung der Bilder genutzt werden. Dies führt zu einer weiteren Reduzierung der Auflösung beim Scannen.

Die Aufgabe der vorliegenden Erfindung besteht darin, ein Verfahren bzw. eine Vorrichtung der eingangs genannten Art derart weiterzubilden, daß mit einer vorgegebenen Abtasteinrichtung eine verbesserte Auflösung bei einer Vielzahl von Filmarten bzw. -formaten realisiert werden kann.

Gelöst wird die Aufgabe bei einem Verfahren bzw. einer Vorrichtung der eingangs genannten Art durch die im kennzeichnenden Teil des Anspruchs 1 bzw. 18 angegebenen Merkmale. Durch die Erfindung wird es insbesondere möglich, den sich durch die unterschiedliche Ausbildung (Abmessung, Hoch- oder Querformat, ...) verschiedener Filmarten und auch den sich durch die Asymmetrie eines rechteckigen CCD-Chips ergebenden Folgen Rechnung zu tragen und diese zum Vorteil zu nutzen.

Ein besonderer Vorteil der Erfindung besteht in der Erhöhung der Bildqualität bei der Erstellung großformatiger Prints. Bei diesen wirken sich nämlich die zuvor geschilderten Nachteile des Standes der Technik im Hinblick auf den Auflösungsverlust beim Digitalisieren von Negativen besonders gravierend aus.

Ein weiterer Vorteil der Erfindung ist in den erweiterten Einsatzmöglichkeiten im Hinblick auf Filmarten und -formate mit derselben Abtasteinrichtung und optimierter Auflösung zu sehen.

Ebenso kann vorteilhaft ein Drehen und/oder Verfahren einer Abtasteinrichtung verwendet werden, um ein sogenanntes "exzentrisches Cropping" mit optimierter Auflösung bei allen Negativformaten zu ermöglichen.

Vorteilhafterweise weist die Abtasteinrichtung eine sensitive Fläche mit einer Längsrichtung und einer Querrichtung auf. Bei einer derart asymmetrischen Abtasteinrichtung kann deren Bewegung, insbesondere deren Ausrichtung vor dem Abtast- bzw. Scanvorgang, zur Optimierung der Auflösung vorteilhaft sein. Vorzugsweise ist die Abtasteinrichtung eine CCD, insbesondere mit einer rechteckigen sensitiven Fläche.

Gemäß einer bevorzugten Ausführungsform der Erfindung wird vor dem Abtastvorgang die Abtasteinrichtung zu den belichteten Bereichen zur Einstellung eines optimalen Auflösungsverhältnisses ausgerichtet.

Zur Optimierung der Auflösung ist bevorzugt, die Ausrichtung der Abtasteinrichtung in Abhängigkeit von den Abmessungen der belichteten Bereiche eines Films einzustellen.

Es ist bevorzugt, daß die belichteten Bereiche eine Längsrichtung und eine Querrichtung aufweisen, wobei die Abtasteinrichtung vor dem Abtastvorgang derart ausgerichtet wird, daß die Längsrichtung der sensitiven Fläche im wesentlichen parallel zu der Längsrichtung der belichteten Bereiche ist. Auf diese Weise werden die vorhandenen Asymmetrien zur Optimierung der Auflösung und zur Minimierung von Informationsverlust beim Scannen ausgenutzt.

Vorteilhafterweise erfolgt die Ausrichtung der Abtasteinrichtung durch eine Drehung, und zwar insbesondere durch eine Drehung in der Ebene der Abtasteinrichtung um 90 Grad. Dadurch kann insbesondere eine CCD so eingesetzt werden, daß sich die jeweilige Orientierung nach der jeweils besseren Auflösung richtet.

Bevorzugt ist ebenfalls, daß die Abtasteinrichtung eine Mehrzahl von Abtastvorgängen eines bestimmten, belichteten Bereichs eines Films (einer Vorlage) durchführt, wobei die abgetasteten Werte zu einem digitalen Gesamtbild zusammengesetzt werden. Einzelne Vorlagenbereiche können dabei überlappend oder aneinandergrenzend erfaßt werden. Ein Überlappen kann insbesondere hilfreich sein, um beispielsweise regionale Helligkeitsunterschiede der Scannerbeleuchtung ausgleichen zu können.

Um verschiedene Vorlagenbereiche durch mehrere Abtastvorgänge zu erfassen, wird zwischen den einzelnen Abtastvorgängen die Abtasteinrichtung, insbesondere linear, bewegt.

Soll eine Vorlage zweifach abgetastet werden, wird die Abtasteinrichtung zwischen den Abtastvorgängen etwa um die Hälfte ihrer Erstreckung bzw. der Erstreckung der sensitiven Fläche in der Längs- oder, Querrichtung bewegt. Diese Bewegung erfolgt in einer Ebene.

Vorteilhafterweise wird die Abtasteinrichtung etwa um die Hälfte ihrer Erstreckung bzw. der Erstreckung der sensitiven Fläche in der Längs- und der Querrichtung bewegt und führt dabei von einer Vorlage vier einzelne Abtastvorgänge durch.

Die Erfindung sowie weitere Merkmale, Ziele, Vorteile und Anwendungsmöglichkeiten wird bzw. werden nachfolgend unter Bezugnahme auf die beigefügten Zeichnungen näher erläutert. Dabei bilden alle beschriebenen und/oder bildlich dargestellten Elemente in beliebiger sinnvoller Kombination den Gegenstand der vorliegenden Erfindung, und zwar unabhängig von ihrer Zusammenfassung in den Patentansprüchen oder deren Rückbeziehung. Überall in den Zeichnungen bezeichnen dieselben Bezugszeichen dieselben oder entsprechende Elemente. In den Zeichnungen zeigen:
- Fig. 1: eine schematische Darstellung des digitalen Erfassens eines Kleinbildfilms mit einer CCD;
- Fig. 2: eine schematische Darstellung des digitalen Erfassens eines hochformatigen Rollfilms mit einer CCD; und
- Fig. 3: eine schematische Darstellung des digitalen Erfassens eines querformatigen Rollfilms mit einer CCD, wobei die CCD zwischen den Abtastvorgängen linear bewegt wird.

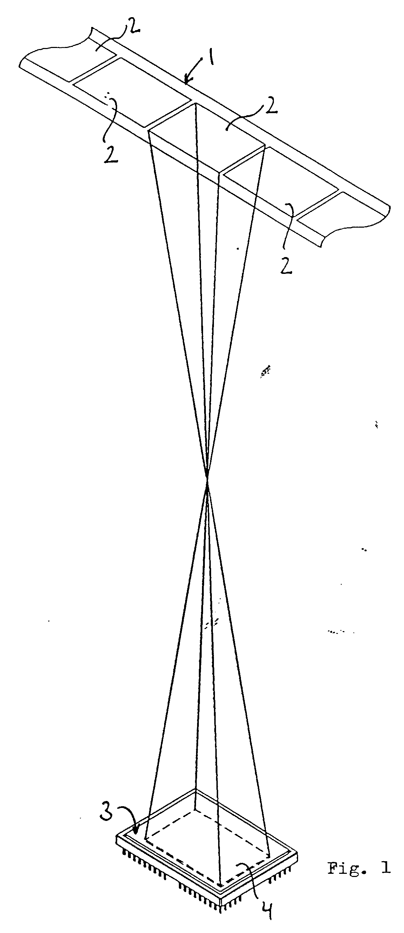

Der Fig. 1 entnimmt man das digitale Erfassen eines Kleinbildfilms 1, der einzelne Vorlagen als belichtete Bereiche 2 aufweist. Die belichteten Bereiche 2 besitzen ein im wesentlichen rechteckiges Format. Ferner sind die Bereiche 2 in der Bewegungsrichtung des Kleinbildfilms 1 nebeneinander im Querformat angeordnet. Zur Abtastung der belichteten Bereiche 2 ist eine CCD 3 vorgesehen. Die CCD 3 weist eine im wesentlichen rechteckige aktive oder sensitive Fläche 4 auf. In der gezeigten Grundstellung der CCD 3 ist die sensitive Fläche 4 so ausgerichtet, daß die längere Kante dieser Fläche parallel zu der längeren Kante der belichteten Bereiche 3 verläuft Jeweils ein belichtetes Negativ wird von der CCD 3 abgetastet.

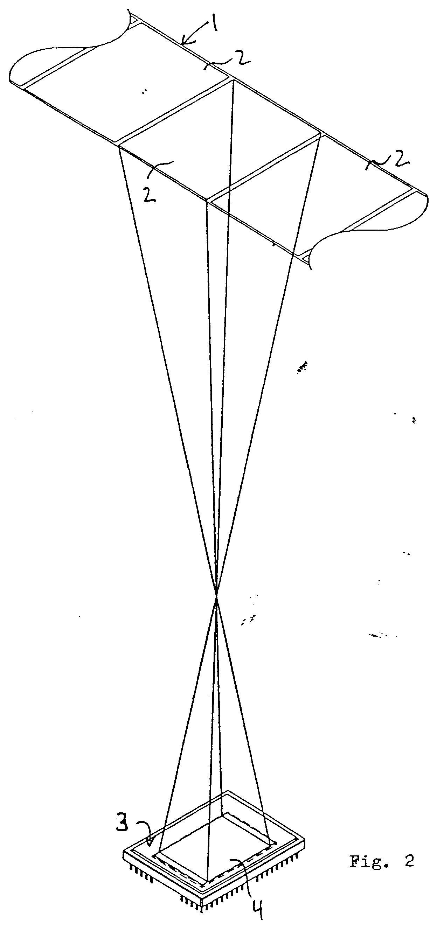

In Fig. 2 ist schematisch das digitale Erfassen eines mit 1 bezeichneten Rollfilms dargestellt, dessen Breite beispielsweise 60 mm beträgt. Auf dem Rollfilm 1 sind belichtete Bereiche 2 mit Abmessungen von z. B. 60 mm x 45 mm (Halbformat) im Hochformat nebeneinander angeordnet. Die zum Abtasten der belichteten Bereiche 2 vorgesehene Abtasteinrichtung oder CCD 3 wurde von einer (nicht dargestellten) Dreheinrichtung aus deren Grundstellung, wie sie in Fig. 1 gezeigt ist, um 90 Grad verdreht, so daß die Ausrichtung der rechteckigen, optisch sensitiven Fläche 4 der CCD 3 mit den belichteten Bereichen 2 hinsichtlich der Ausrichtung bzw. Orientierung übereinstimmt.

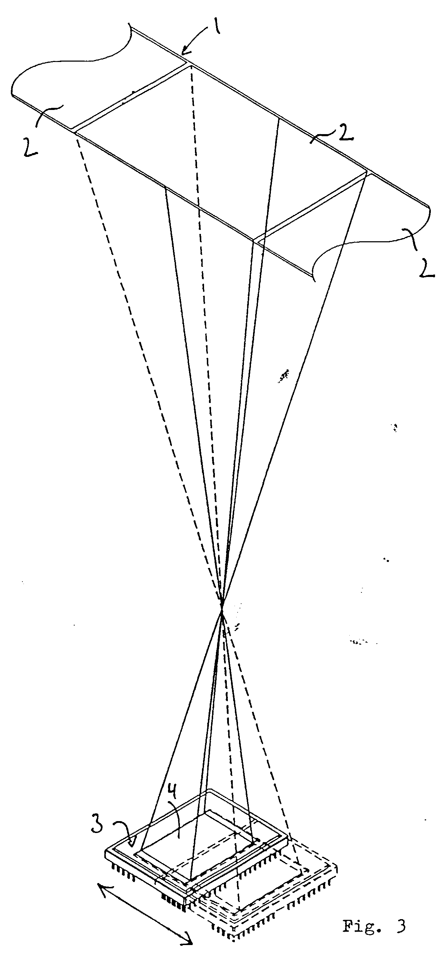

In der Darstellung der Fig. 3 erkennt man das digitale Erfassen eines Rollfilms 1 mit Bereichen 2, die im Querformat aufbelichtet wurden. Eine CCD 3, wurde gegenüber der in Fig. 1 gezeigten Grundstellung vor dem eigentlichen Abtastvorgang - wie auch in Fig. 2 - um 90 Grad gedreht. Die belichteten Bereiche 2 weisen z. B. eine Abmessung von 60 mm x 90 mm auf. Selbstverständlich kann der Rollfilm 1 auch belichtete Bereiche in anderen Querformaten, wie z. B. 60 mm x 70 mm oder 60 mm x 80 mm aber auch in dem quadratischen Format 60 mm x 60 mm aufweisen. Zum Abtasten einer Vorlage 2 wird die CCD 3 nach einem ersten Abtastvorgang um etwa die Hälfte ihrer Breite in deren Querrichtung (vgl. die Pfeilrichtung in Fig. 3) nach links oder rechts - entsprechend der Darstellung in der Zeichnung - linear verschoben. Dabei können die gescannten Teilbilder überlappen oder genau aneinandergrenzen. In einer (nicht dargestellten) Bildverarbeitungseinheit werden die Teilbilder anschließend zu einem Gesamtbild zusammengesetzt.

Aus einer Zusammenschau der Fig. 1 bis 3 wird insbesondere das erfindungsgemäße Prinzip deutlich, daß durch eine einzige CCD 3, welche gedreht bzw. verfahren wird, eine Vielzahl von unterschiedlichen Filmen mit optimierter Auflösung abgetastet werden kann. Die Erfindung wurde zuvor anhand von bevorzugten Ausführungsformen näher erläutert. Für einen Fachmann ist es jedoch offensichtlich, daß unterschiedliche Abwandlungen und Modifikationen gemacht werden können, ohne den der Erfindung zugrundeliegenden Gedanken zu verlassen. Insbesondere ist von der Erfindung auch jegliche Art von direkter oder indirekter Relativbewegung zwischen der Abtasteinrichtung und dem zu erfassenden Film umfaßt.

## Patentansprüche

1. Verfahren zum digitalen Erfassen von Vorlagen (1) mit einer Abtasteinrichtung (3), die eine sensitive, rechteckige Fläche (4) mit unterschiedlicher Längs- und Querausdehnung aufweist, welche in Längsrichtung und in Querrichtung aus einer Vielzahl von Pixeln besteht, **dadurch gekennzeichnet,** dass die Abtasteinrichtung (3) in Abhängigkeit von den Abmessungen der Vorlage um eine Achse senkrecht zu der sensitiven Fläche gedreht wird.

2. Verfahren nach Anspruch 1, dadurch gekennzeichnet, daß die Erfassung in Abhängigkeit von den Abmessungen der Vorlage in mehreren Schritten durchgeführt wird, wobei die Abtasteinrichtung zwischen den einzelnen Schritten linear um mehrere Pixel verschoben wird.

3. Verfahren nach Anspruch 1 oder 2, dadurch gekennzeichnet, daß die Abtasteinrichtung (3) eine CCD ist.

4. Verfahren nach einem der Ansprüche 1 bis 3, dadurch gekennzeichnet, daß vor dem Abtastvorgang die Abtasteinrichtung (3) zu den Vorlagen (1) zur Einstellung eines optimalen Auflösungsverhältnisses ausgerichtet wird.

5. Verfahren nach Anspruch 1, dadurch gekennzeichnet, daß die Drehung eine Drehung um 90 Grad ist.

6. Verfahren nach einem der vorhergehenden Ansprüche, dadurch gekennzeichnet, daß die Abtasteinrichtung (3) eine Vorlage (1) mehrmals erfaßt, wobei die jeweils erfaßten Daten zu einem digitalen Gesamtbild zusammengesetzt werden.

7. Verfahren nach Anspruch 2, dadurch gekennzeichnet, daß die Abtasteinrichtung (3) etwa um die Hälfte ihrer Erstreckung in der Längs- oder Querrichtung bewegt wird.

8. Verfahren nach Anspruch 7, dadurch gekennzeichnet, daß die Abtasteinrichtung (3) eine Vorlage (1) zweimal erfaßt.

9. Verfahren nach Anspruch 1 oder 2, dadurch gekennzeichnet, daß die Abtasteinrichtung (3) in einer Ebene bewegt wird.

10. Verfahren nach Anspruch 9, dadurch gekennzeichnet, daß die Abtasteinrichtung (3) etwa um die Hälfte ihrer Erstreckung in der Längs- und der Querrichtung bewegt wird.

11. Verfahren nach Anspruch 10, dadurch gekennzeichnet, daß die Abtasteinrichtung (3) eine Vorlage (1) viermal erfaßt.

12. Verfahren nach Anspruch 2, dadurch gekennzeichnet, daß bei der Mehrzahl von Erfassungsschritten einzelne Vorlagenbereiche überlappend erfaßt werden.

13. Verfahren nach Anspruch 2, dadurch gekennzeichnet, daß bei der Mehrzahl von Erfassungsschritten einzelne Vorlagenbereiche aneinandergrenzend erfaßt werden.

14. Vorrichtung zum digitalen Erfassen von Vorlagen (1) mit einer Abtasteinrichtung (3), die eine sensitive, rechteckige Fläche (4) mit unterschiedlicher Längs- und Querausdehnung aufweist, welche in einer Längsrichtung und einer Querrichtung aus einer Vielzahl von Pixeln besteht, **dadurch gekennzeichnet,** daß die Vorrichtung eine Einrichtung aufweist, die die Abtasteinrichtung (3) in Abhängigkeit von den Abmessungen der Vorlage um eine Achse senkrecht zu der sensitiven Fläche dreht.

15. Vorrichtung nach Anspruch 14, dadurch gekennzeichnet, daß die Vorrichtung eine Einrichtung aufweist, die die Abtasteinrichtung (3) in Abhängigkeit von den Abmessungen der Vorlage zwischen mehreren Erfassungsschritten linear um mehrere Pixel verschiebt.

16. Vorrichtung nach Anspruch 15, dadurch gekennzeichnet, daß die Einrichtung eine Linearpositioniereinrichtung ist.

17. Vorrichtung nach Anspruch 15, dadurch gekennzeichnet, daß die Einrichtung eine Planarpositioniereinrichtung ist.
